# EUROPÄISCHE PATENTSCHRIFT

(11) **EP 1 123 677 B1**
(45) Veröffentlichungstag und Bekanntmachung des Hinweises auf die Patenterteilung: **13.10.2004**
(21) Anmeldenummer: 00102826.5
(22) Anmeldetag: 11.02.2000
(51) Int. Cl.: A47J 39/02

(54) **Anordnung mit einer Vorrichtung zum Erwärmen und/oder Warmhalten von Geschirreinheiten**
Unit with a device for heating and/or warming of dishes
Ensemble avec un dispositif pour chauffer et/ou garder au chaud des assiettes

(43) Veröffentlichungstag der Anmeldung: 16.08.2001
(73) Patentinhaber: Schröder, Walter, 8810 Horgen (DE)
(72) Erfinder: Schröder, Walter, 8810 Horgen (CH); Mittermeier, Christian, 91541 Rothenburg o.T. (DE)
(74) Vertreter: Troesch Scheidegger Werner AG

(56) Entgegenhaltungen:
- EP-A- 0 516 568
- CH-A- 516 933
- DE-A- 1 579 508
- DE-A- 2 027 456

## Beschreibung

Die vorliegende Erfindung betrifft Anordnungen nach dem Oberbegriff des Patentanspruchs 1, eine Vorrichtung nach dem Oberbegriff des Patentanspruchs 6 sowie eine Kocheinheit mit der Vorrichtung und der Anordnung.

Beim Anrichten von warmen Speisen werden mit Vorteil vorgewärmte Teller verwendet, damit die Speisen nicht vorzeitig abkühlen. Zum Vorwärmen der Teller werden sogenannte Wärmeschubladen oder separate Tellerwärmer verwendet, die im wesentlichen aus einem mit Heizelementen versehenen Hohlraum bestehen. Bei diesen bekannten Vorrichtungen werden die zu erwärmenden Teller im Hohlraum gestapelt, wobei der zuoberst liegende Teller über eine Öffnung entnommen werden kann.

CH-516 933 beschreibt eine Theke, bestehend aus einem Wärmeaggregat und einer mit diesem verbundenen Einheit zur Aufnahme von Behältnissen für Nahrungsmittel. Die bekannte Lehre wird im Bereich der Speiseausgabe eingesetzt. Aus diesem Grund ist die Mobilität der Theke von besonderer Bedeutung.

Die bekannten Wärmevorrichtungen sind in der Handhabung umständlich und benötigen viel Platz. Insbesondere die zur Energieversorgung der Wärmevorrichtungen benötigten elektrischen Kabel schränken den Bewegungsraum ein und stellen darüber hinaus eine Gefahrenquelle dar.

Der vorliegenden Erfindung liegt daher die Aufgabe zugrunde, eine Anordnung anzugeben, welche die vorstehend genannten Nachteile nicht aufweist.

Diese Aufgabe wird durch die in den kennzeichnenden Teilen der Patentansprüche 1 und 3 angegebenen Massnahmen gelöst. Vorteilhafte Ausgestaltungen der Erfindung, eine Vorrichtung sowie eine Kocheinheit mit der Vorrichtung und der Anordnung sind in weiteren Ansprüchen angegeben.

Die Erfindung weist die folgenden Vorteile auf: Indem eine Vorrichtung zum Erwärmen und/oder Warmhalten von Geschirreinheiten in die Arbeitsplatte einer Kücheneinheit integriert wird, wird ein überaus einfaches Anrichten von Speisen ermöglicht. Besonders vorteilhaft ist dabei die Bereitstellung von warmen Geschirreinheiten auf der gleichen Arbeitshöhe und im gleichen Arbeitsbereich, wo auch die Speisen zubereitet werden. Bei einer Integration der erfindungsgemässen Vorrichtung unmittelbar neben oder im Kochfeld ermöglicht zudem das Anrichten der Speisen auf einer Geschirreinheit, die sich weiterhin in der Wärmevorrichtung befindet. Die Wärmezufuhr zu den Geschirreinheiten ist damit auch beim Anrichten der Speisen gewährleistet.

Die Erfindung wird nachfolgend anhand von Zeichnungen beispielsweise näher erläutert. Dabei zeigen
- Fig. 1: eine erfindungsgemässe Vorrichtung in einem Schnitt senkrecht zur Arbeitsfläche,
- Fig. 2: eine weitere Ausführungsform der erfindungsgemässen Vorrichtung in einer Ansicht gemäss Fig. 1,
- Fig. 3: die erfindungsgemässe Vorrichtung gemäss Fig. 1 in einer Ansicht von oben,
- Fig. 4: eine erfindungsgemässe Anordnung der Vorrichtung gemäss Fig. 1 in verschiedenen Ansichten,
- Fig. 5: eine weitere Anordnung einer weiteren Ausführungsform einer erfindungsgemässen Vorrichtung und
- Fig. 6: eine weitere Anordnung der erfindungsgemässen Vorrichtung in einer Schublade.

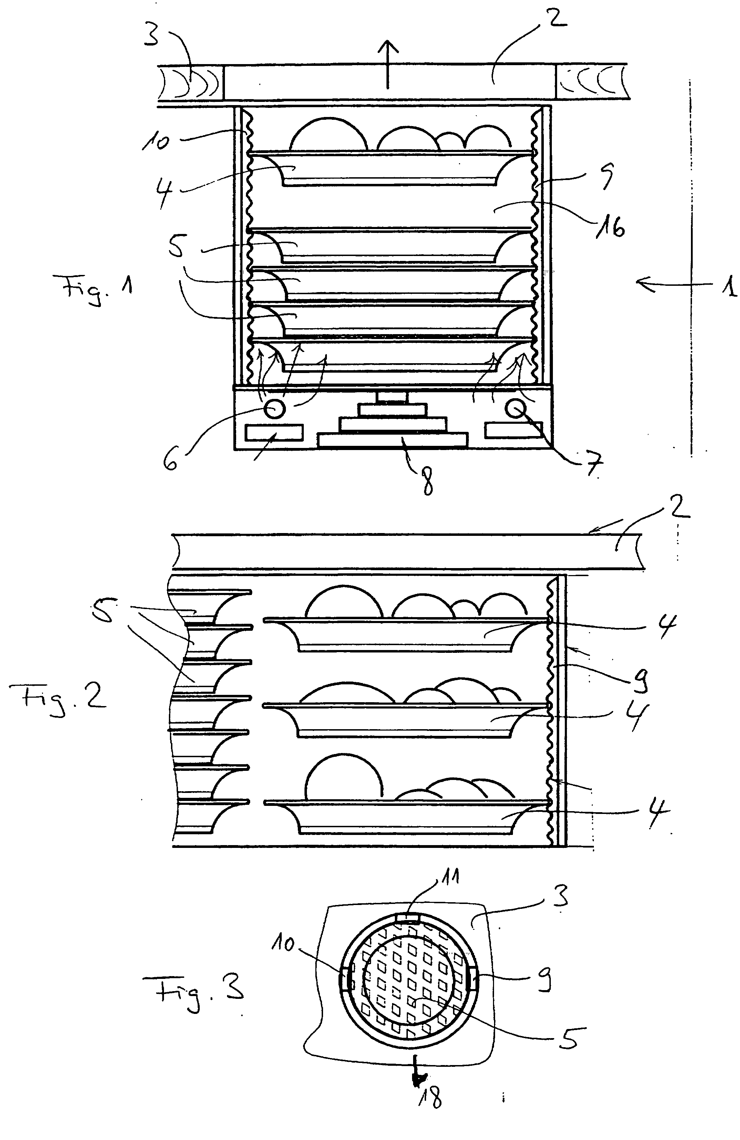

In Fig. 1 ist eine erfindungsgemässe Vorrichtung 1 zum Erwärmen und/oder Warmhalten von Geschirreinheiten 4 und 5, wie Teller oder dgl., dargestellt. Die erfindungsgemässe Vorrichtung 1 besteht aus einem Hohlraum 16 zum Aufnehmen von Geschirreinheiten 4 und 5, wobei im Hohlraum 16 Heizelemente 6 und 7 vorgesehen sind, mit denen die Geschirreinheiten 4 und 5 indirekt, d.h. über die im Hohlraum 16 enthaltene Luft, erwärmt werden. Des weiteren ist im Bodenbereich des Hohlraumes 16 eine Hebeeinheit 8 vorgesehen, mit welcher die Geschirreinheiten 4, 5 nach Bedarf angehoben werden können. Die Geschirreinheiten 4, 5 werden durch seitlich angeordnete Rasterelemente 9, 10 gehalten, indem die Ränder der Geschirreinheiten 4, 5 in Ausnehmungen der Rasterelemente 9, 10 eingreifen.

Mit der Hebeeinheit 8 werden die Rasterelemente 9, 10 samt den in diesen fixierten Geschirreinheiten 4, 5 nach Bedarf angehoben, so dass auf diesen in einfacher Weise Speisen deponiert werden können. Für die Steuerung der Hebeeinheit ist an geeigneter Stelle eine Steuereinheit (in den Figuren nicht dargestellt) vorgesehen, über welche die Höhe der Geschirreinheiten 4, 5 einstellbar ist.

Die Rasterelemente 9, 10 ermöglichen es, dass die Geschirreinheiten 4, 5 beliebig beabstandet im Hohlraum 16 angeordnet werden können. Damit können auf einzelnen oder allen Geschirreinheiten 4, 5 Speisen deponiert werden. Zum Warmhalten der Speisen und/oder der Geschirreinheiten 5 werden diese wiederum in den Hohlraum 16 gebracht, indem die Rasterelemente 9, 10 mit der Hebeeinheit 8 abgesenkt werden. Sind die Rasterelemente 9, 10 vollständig abgesenkt, so kann die Öffnung mit einem Deckel 2 verschlossen werden, wobei in einer bevorzugten Ausführungsform der erfindungsgemässen Vorrichtung 1 der Deckel 2 oberflächenbündig in die Arbeitsfläche 3 eingepasst ist.

Bei einer weiteren Ausführungsform der erfindungsgemässen Vorrichtung 1 sind die Rasterelemente 9, 10 leicht demontierbar, so dass bei demontierten Rasterelementen 9, 10 die Geschirreinheiten 4, 5 zwar nicht mehr beabstandet in den Hohlraum 16 aufgenommen werden können, doch eignet sich diese Ausführungsform zur Aufnahme eines Stapels von Geschirreinheiten 4, die in bekannter Weise oben entnehmbar sind.

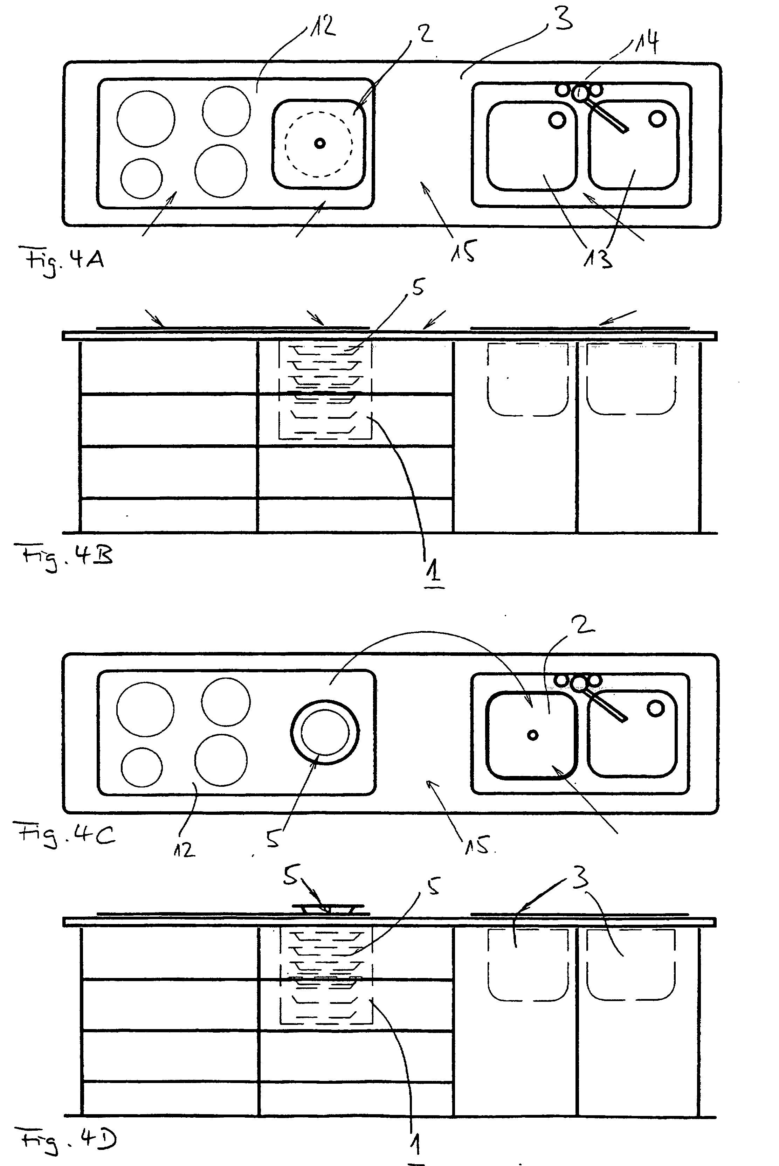

Fig. 2 zeigt ausschnittsweise eine weitere Ausführungsform einer erfindungsgemässen Vorrichtung, bei der ein Stapel mit leeren Geschirreinheiten 5 neben in Rasterelementen 9 gehaltenen und demzufolge beabstandeten Geschirreinheiten 4 vorgesehen ist.

Fig. 3 zeigt eine Ansicht von oben auf einen Ausschnitt der Arbeitsfläche 3 mit einer erfindungsgemässen Vorrichtung gemäss Fig. 1, wobei die Öffnung nicht mit einem Deckel 2 abgedeckt ist, so dass die oberste Geschirreinheit 5 sowie die Rasterelemente 9, 10 und 11 sichtbar sind. Zur Entnahme der Geschirreinheit 5 wird diese mit der Hebeeinheit 8 (Fig. 1) über die Arbeitsfläche 3 angehoben und anschliessend in Pfeilrichtung, gekennzeichnet mit dem Hinweiszeichen 18, gezogen.

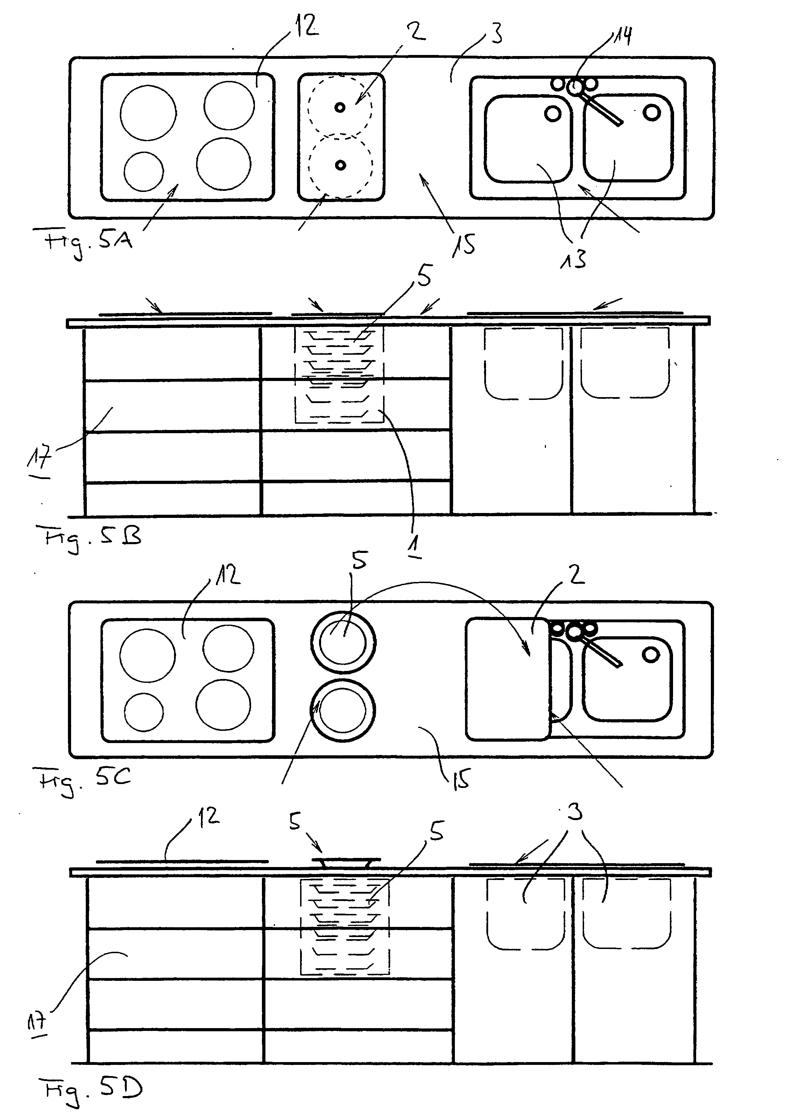

Fig. 4 zeigt in verschiedenen Ansichten eine erfindungsgemässe Anordnung einer Vorrichtung 1 (Fig. 4B) gemäss Fig. 1, wobei die Vorrichtung in einem Kochfeld 12 integriert ist, damit also unmittelbar neben den Kochstellen angeordnet ist. Des weiteren ist die Vorrichtung 1 auf der einem Waschbecken 13 zugewandten Seite angeordnet, mithin also zwischen den Kochstellen und dem Waschbecken 13.

In den Fig. 4A und 4B ist die Öffnung mit dem Deckel 2 zugedeckt dargestellt, so dass sich zwischen Kochstellen und Waschbecken 13 eine Freifläche, bestehend aus der Fläche im Bereich der Vorrichtung 1 und einer ständigen Arbeitsfläche 15, ergibt.

In den Fig. 4C und 4D ist der Deckel 2 der Vorrichtung 1 zum Abdecken des Waschbeckens 13 verwendet. Die verfügbare Arbeitsfläche, beim Beispiel gemäss Fig. 4 im wesentlichen bestehend aus der ständigen Arbeitsfläche 15 und der Fläche über dem mit dem Deckel 2 abgedeckten Waschbecken 13, wird hierdurch beibehalten.

In den Figuren 5A, 5B, 5C und 5D sind eine weitere erfindungsgemässe Anordnung und eine weitere Ausführungsform einer erfindungsgemässen Vorrichtung dargestellt, wobei diese wiederum neben den Kochstellen, jedoch nicht im Kochfeld selbst, angeordnet ist. Des weiteren besteht die Wärmevorrichtung aus zwei Öffnungen zur separaten Entnahme von Geschirreinheiten.

In einer weiteren Ausführungsform ist vorgesehen, dass der Deckel 2 auf Schienen (in den Figuren nicht dargestellt) verschiebbar gelagert ist.

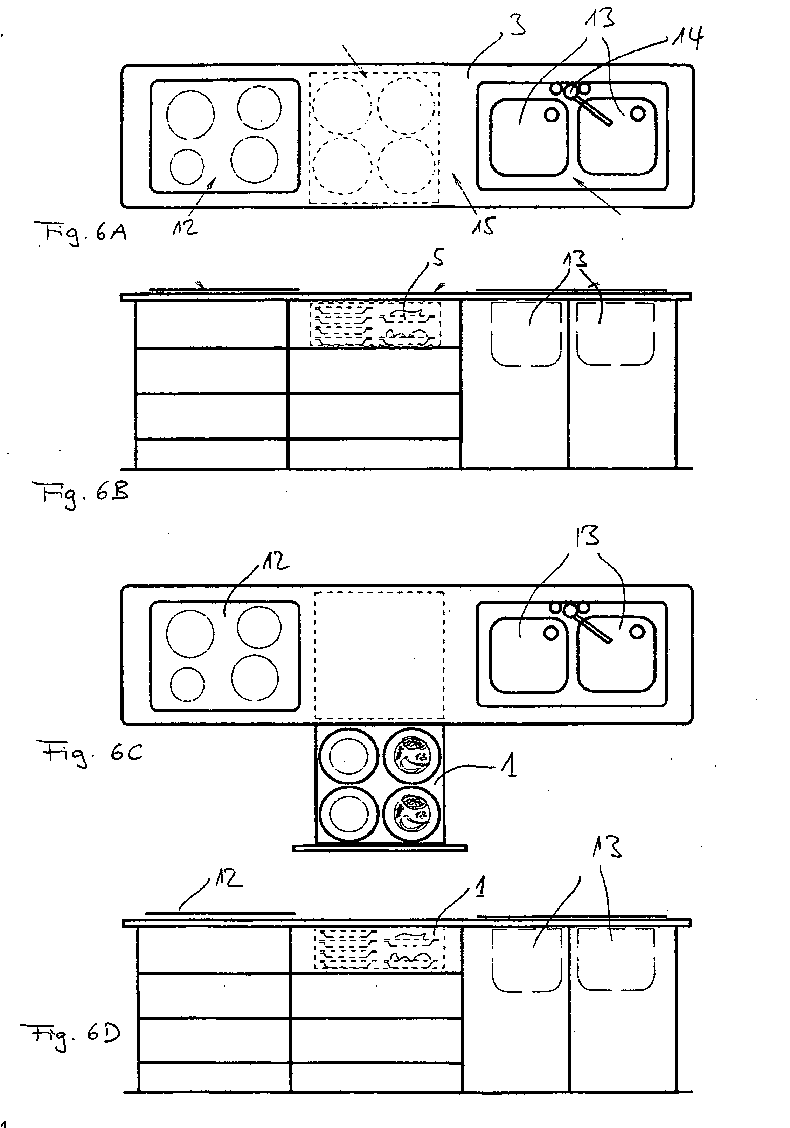

In den Figuren 6A, 6B, 6C und 6D ist eine weitere Anordnung einer erfindungsgemässen Vorrichtung dargestellt, wobei es vorgesehen ist, dass der Hohlraum 1 zur Aufnahme von Geschirreinheiten 5 in einer Schublade enthalten ist, die vorzugsweise unmittelbar unterhalb der ständigen Arbeitsfläche 15 angeordnet ist. Wie in Fig. 6C ersichtlich ist, sind vier separate Einheiten mit Geschirreinheiten 5 vorgesehen. Abhängig von den Platzverhältnissen können dies selbstverständlich auch mehr oder weniger solcher Einheiten sein.

## Patentansprüche

1. Anordnung mit einer Vorrichtung (1) zum Erwärmen und/oder Warmhalten von Geschirreinheiten (4, 5), wie Teller oder dgl., mit einem Hohlraum (16) zum Aufnehmen von Geschirreinheiten (4, 5), wobei in den Hohlraum (16) wirkende Heizelemente (6, 7) vorgesehen sind, der Hohlraum (16) eine Öffnung zum Entnehmen von Geschirreinheiten (4, 5) aufweist, die Öffnung in einer Kücheneinheit (17) vorgesehen ist und die Öffnung mit einem Deckel (2) abdeckbar ist, **dadurch gekennzeichnet, dass** die Öffnung in einer Arbeitsplatte (3) oder einer Frontplatte der Kücheneinheit (17) vorgesehen ist und dass die Vorrichtung (1) in einem Kochfeid (12) integriert ist.

2. Anordnung nach Anspruch 1, **dadurch gekennzeichnet, dass** die Vorrichtung (1) zwischen Kochstellen des Kochfeldes (12) und einem Waschbecken (13) angeordnet ist.

3. Anordnung nach dem Oberbegriff von Anspruch 1, **dadurch gekennzeichnet, dass** die Öffnung in einer Arbeitsplatte (3) oder einer Frontplatte der Kücheneinheit (17) vorgesehen ist und dass die Vorrichtung (1) zwischen einem Kochfeld (12) und einem Waschbecken (13) angeordnet ist.

4. Anordnung nach Anspruch 2 oder 3, **dadurch gekennzeichnet, dass** der Deckel (2) zur Abdeckung der Öffnung des Hohlraums (16) gleichzeitig zur Abdeckung des Waschbeckens (13) geeignet ist, sofern die Öffnung in der Arbeitsplatte (3) vorgesehen ist.

5. Anordnung nach einem der Ansprüche bis 4, **dadurch gekennzeichnet, dass** der Deckel (2) und die mit diesem zu verschliessende Öffnung derart ausgebildet sind, dass der Deckel (2) oberflächenbündig in die Arbeitsplatte (3) passt.

6. Vorrichtung (1) zum Erwärmen und/oder Warmhalten von Geschirreinheiten (4, 5), wie Teller oder dgl., mit einem Hohlraum (16) zum Aufnehmen von Geschirreinheiten (4, 5), wobei in den Hohlraum (16) wirkende Heizelemente (6, 7) vorgesehen sind, der Hohlraum (16) eine Öffnung zum Entnehmen von Geschirreinheiten (4, 5) aufweist, und die Geschirreinheiten (4, 5) im Hohlraum (16) beabstandet sind, **dadurch gekennzeichnet, dass** zum beabstandeten Halten der Geschirreinheiten (4, 5) Rasterelemente (9, 10, 11) vorgesehen sind, wobei die Rasterelemente (9, 10, 11) je nach Durchmesser der zu haltenden Geschirreinheiten (4, 5) positionierbar sind.

7. Vorrichtung nach Anspruch 6, **dadurch gekennzeichnet, dass** im Hohlraum (16) eine Hebeeinheit (8) zum vertikalen Transportieren der Geschirreinheiten (4, 5) vorgesehen ist.

8. Kocheinheit mit einer Anordnung nach einem der Ansprüche 1 bis 6 und einer Vorrichtung (1) nach Anspruch 6 oder 7.

## Claims

1. Arrangement with a device (1) for heating and/or keeping warm of units of dishes (4,5), as plates or the like, with a cavity (16) for receiving unities of dishes (4,5), heating elements (6,7) being provided to act in the cavity (16), the cavity (16) having an opening for taking out units of dishes (4,5), the opening being provided in a kitchen unit (17) and the opening being coverable by a cover (2), **characterized in that** the opening is provided in a working plate (3) or in a front plate of the kitchen unit (17) and that the device (1) is integrated into a hot plate unit (12).

2. Arrangement according to claim 1, **characterized in that** the device (1) is arranged in between hot plate of the hot plate unit (12) and a wash basin (13).

3. Arrangement according to the precharacterizing part of claim 1, **characterized in that** the opening is provided in a working plate (3) or in a front plate of the kitchen unit (17) and that the device (1) is arranged in between a hot plate unit (12) and a wash basin.

4. Arrangement according to claim 2 or 3, **characterized in that** the cover (2) for covering the opening of the cavity (16) is suitable to cover the wash basin (13) at the same time, if the opening is provided in the working plate (3).

5. Arrangement according to one of the claims 1 to 4, **characterized in that** the cover (2) and the opening being closed by the cover (2) are formed in such a manner that the surface of the cover (2) is flush with the working plate.

6. Device (1) for heating and/or keeping warm of units of dishes (4,5), as plates or the like, with a cavity (16) for receiving units of dishes (4,5), heating elements (6,7) being provided to act in the cavity (16), the cavity (16) having an opening for taking out units of dishes (4,5), and the units of dishes (4,5) being separated in the cavity (16), **characterized in that** raster elements (9,10,11) are provided to hold the units of dishes (4,5) apart, the raster elements (9, 10, 11) being positionable in function of the diameter of the units of dishes (4, 5) to hold.

7. Device according to claim 6, **characterized in that** a lifting unit (8) is provided in the cavity (16) for vertically transporting the units of dishes (4, 5).

8. Kitchen unit with an arrangement according to one of the claims 1 to 6 and with a device (1) according to claim 6 or 7.

## Revendications

1. Ensemble avec un dispositif (1) pour chauffer et/ou darder au chaud des unités de vaisselle (4,5), comme des assiettes ou similaires, comprenant une cavité (16) destinée à recevoir des unités de vaisselle (4,5), ainsi que des éléments de chauffage (6,7) agissant dans ladite cavité, cette cavité (16) présentant une ouverture pour prélever des unités de vaisselle (4,5), ladite ouverture étant prévue dans une unité de cuisine (17) et ladite ouverture pouvant être fermée par un couvercle (2), **caractérisé en ce que** ladite ouverture est prévue dans un panneau de travail (3) ou un panneau frontal de l'unité de cuisine (17) et **en ce que** ledit dispositif (1) est intégré dans une plaque de cuisson (12).

2. Ensemble selon la revendication 1, **caractérisé en ce que** ledit dispositif (1) est disposé entre des places de cuisson de la plaque de cuisson (12) et un bac de lavage (13).

3. Ensemble selon le préambule de la revendication 1, **caractérisé en ce que** ladite ouverture est prévue dans un panneau de travail (3) ou un panneau frontal de l'unité de cuisine (13) et **en ce que** ledit dispositif (1) est disposé entre une plaque de cuisson (12) et un bac de lavage (13).

4. Ensemble selon la revendication 2 ou 3, **caractérisé en ce que** le couvercle (2) pour recouvrire l'ouverture de la cavité (16) est en même temps apte a recouvrir ledit bac de lavage (13), à condition que ladite ouverture soit prévue dans le panneau de travail (3).

5. Ensemble selon l'une des revendications 1 à 4, **caractérisé en ce que** le couvercle (2) et l'ouverture é fermer par ce dernier soient construit de telle manière que le couvercle (2) puisse être accommodé à surface plane dans ledit panneau de travail (3).

6. Dispositif (1) pour chauffer et/ou gardes au chaud des unités de vaisselle (4,5), comme des assiettes ou similaires, avec une cavité pour recevoir des unités de vaisselle (4,5), des éléments de chauffage (6,7) agissant dans ladite cavité (16) étant prévus et la cavité (16) présentant une ouverture pour prélever des unités de vaisselle (4,5) et les unités de vaisselle (4,5) étant disposées avec espacement dans la cavité (16), **caractérisé par** des éléments à crans (9,10,11) destinés à supporter les unités de vaisselle (4,5) en écartement, ces éléments a crans (9, 10, 11) pouvant être positionnés en fonction du diamètre des unités de vaisselle (4,5) à supporter.

7. Dispositif selon la revendication 6, **caractérisé par** une unité élévateur (8) dans ladite cavité (16) pour le transport vertical des unités de vaisselle (4,5).

8. Unité de cuisine avec un ensemble selon l'une des revendications 1 à 5 et un dispositif (1) selon la revendication 6 ou 7.
